# EUROPEAN PATENT APPLICATION

(11) **EP 3 671 072 A1**
(43) Date of publication of application: **24.06.2020**
(21) Application number: 18214586.2
(22) Date of filing: 20.12.2018
(51) Int. Cl.: F25B 41/06, F16K 31/04

(54) **VALVE, IN PARTICULAR EXPANSION VALVE**

(71) Applicant: Danfoss A/S, 6430 Nordborg (DK)
(72) Inventor: LARSEN, Sigurd, 6430 Nordborg (DK)
(74) Representative: Stevens, Brian

(57) **Abstract**

A valve (1), in particular an expansion valve, is described comprising a valve seat (2), a valve element (3) movable relatively to the valve seat (2), and drive means driving the valve element (3), wherein the drive means comprise a rotary motor (4) having a rotor (6) and a transmission having a rotating member (7, 10) and a non-rotating member (11) and a threaded connection between the rotating member (7, 10) and the stationary member (11). In such a valve sticking of the valve element (10) to the valve seat (2) should be avoided.

To this end the rotor (6) and the rotating member (7) are rotatable relative to each other, wherein the transmission comprises a follower arrangement comprising a first part (8) connected to the rotor (6) and a second part (9) connected to the rotating member (7), wherein the first part (8) and the second part (9) are rotatable relative to each other over a limited angle.

## Description

The present invention relates to a valve, in particular expansion valve, comprising a valve seat, a valve element movable relatively to the valve seat, and drive means driving the valve element, wherein the drive means comprise a rotary motor having a rotor and a transmission having a rotating member and a non-rotating member and a threaded connection between the rotating member and the stationary member.

Such a valve can be used, for example, to control the flow of a fluid in a cooling system. When the rotary motor is operated, the valve element is moved towards or away from the valve seat. The rotary movement of the rotor is transformed into a linear movement of the valve element by means of the threaded connection.

When the valve is closed, the valve element has been moved into an end position in which it contacts the valve seat. When the force pressing the valve element against the valve seat is too large, a problem can arise in that the valve element sticks to the valve seat. In this case an opening operation of the valve, i.e. the movement of the valve element away from the valve seat can be difficult.

To overcome this problem it is known to control the rotation of the rotor of the rotary motor. However, such a control is difficult and expensive.

Another solution is to use a mechanical stop stopping the rotor after a predetermined number of rotations. When no further rotation of the rotor is possible, the valve element can no longer be moved in a linear movement.

The object underlying the invention is to use another way to prevent sticking of the valve element to the valve seat.

This object is solved with a valve as described at the outset in that the rotor and the rotating member are rotatable relative to each other, wherein the transmission comprises a follower arrangement comprising a first part connected to the rotor and a second part connected to the rotating member, wherein the first part and the second part are rotatable relative to each other over a limited angle.

In this construction the rotor drives the rotating member via the first part and the second part. Since the first part and the second part are rotatable relative to each other only over a limited angle, the part connected to the rotor drags the other part after a movement over the limited angle. However, when the direction of rotation of the rotor is reversed, the driving part does not directly drag the driven part of the first part and the second part in the opposite direction, but has to be moved over the limited angle. In this way the driving part has already been accelerated so that the torque driving the driven part when the driving part hits the other part can be larger than the torque produced by the motor alone. In this way the valve element can be released from the valve seat even if the closing forces had led to a situation in which the valve element sticks to the valve seat.

In an embodiment of the invention the limited angle is provided between a first stop provided in closing direction of the rotating member and a second stop provided in opening direction of the rotating member, wherein the first stop comprises a first pairing of contact areas and the second stop comprises a second pairing of contact surfaces. In this way it is possible to influence the closing and the opening behaviour of the valve element.

In a preferred embodiment the second pairing has a larger stiffness than the first pairing. When the rotor and the rotating part are rotated relatively to each other, the torque acting in closing direction is different from the torque acting in opening direction. In closing direction the contact between the first part and the second part is "soft", i.e. a torque produced by the motor is not fully transferred to a linear force acting on the valve element. Part of the torque is used to compress parts of the first pairing of contact surfaces. However, in the opening direction, the torque produced by the motor is fully transferred into a force acting on the valve element in opening direction, since the second pairing is harder so that no compression takes place.

In an embodiment of the invention the first pairing of contact surfaces is arranged in a first axial position and the second pairing of contact surfaces is arranged in a second axial position. The axial positions relate to the axis of rotation of the rotor. Arranging the two pairings in different axial positions simplifies the construction.

In an alternative embodiment the first pairing and the second pairing have the same stiffness. In this case the opening behaviour and the closing behaviour can be made very similar to each other.

In an embodiment of the invention one of the parts is in form of a pin and the other of the parts comprises a stop member having a recess which has an extension in movement direction of the pin which extension is larger than a corresponding extension of the pin.

In an embodiment of the invention the recess is in form of a curved groove or hole. In other words, the recess is kidney-shaped.

In an embodiment of the invention the pin is provided with an element of different material, in particular a plastic element, over a part of its length. The element can be compressed when the pin is moved in closing direction and comes into contact with the first stop. The uncovered part of the pin is used to come in contact with the second stop when the pin is moved in opening direction. The material of the element is different from the material of the pin. It can be an elastomeric material, so that the contact between the element and the first stop is quite soft. When another material is used, like a plastic material, the contact is harder. However, if desired it can be made softer than a contact between two metal surfaces.

In an embodiment of the invention the elastomeric element projects over the pin in moving direction by a first distance and the stop member comprises a stop offset to a border of the recess in moving direction by a second distance, wherein the first distance is larger than the second distance. In this way it is possible to prevent a contact between the uncovered section of the pin and the stop member when the pin is moved in closing direction. In this case only the elastomeric element comes into contact with the stop member. However, when the pin is moved in open direction, the uncovered part can directly contact the stop member to drag the second part and accordingly the rotating member in opening direction.

In an embodiment of the invention the elastomeric element has a hardness of at least 90 Shore A. This is sufficient for the intended behaviour. However, since the valve is used in an environment of refrigerant, it is preferable to use a quite hard elastomeric or plastic element which can withstand the influences of the refrigerant without being deteriorated.

In an embodiment of the invention the motor is a stepper motor and the recess has an extension in moving direction of the pin which is less than or equal to two full steps of the motor.

The invention is now described in more detail with reference to the drawing, wherein:
- Fig. 1: shows a sectional view through an expansion valve,
- Fig. 2: shows an enlarged detail of parts of a drive means of the valve,
- Fig. 3: shows a perspective view of the parts shown in fig. 2,
- Fig. 4: shows a perspective view of some parts shown in fig. 3, partly broken away and
- Fig. 5: shows a perspective view of another embodiment of the parts shown in fig. 2 and
- Fig. 6: shows a perspective view of some parts shown in fig. 5, partly broken away.

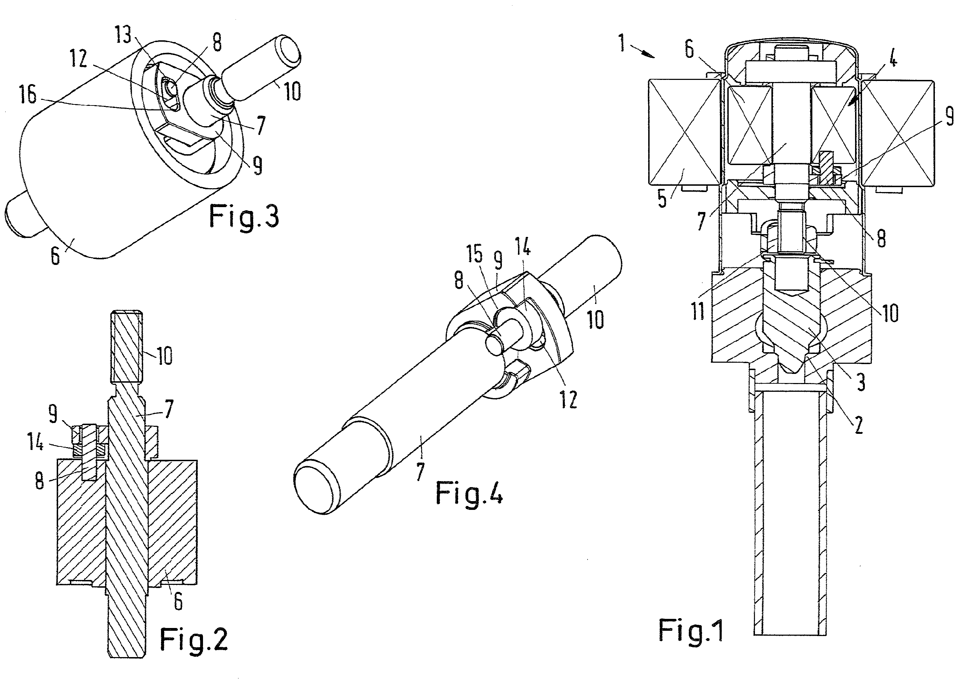

Fig. 1 shows an expansion valve 1 in a sectional view. The expansion valve 1 comprises a valve seat 2 and a valve element 3. The valve element 3 can be moved towards and away from the valve seat 2. To this end the valve element 3 is driven by drive means comprising a rotary motor 4. The motor 4 comprises a stator 5 and a rotor 6. The motor 4 can be in form of a stepper motor.

The rotor is mounted rotatable on a shaft 7.

The shaft 7 is indirectly driven by the rotor 6 by means of a follower arrangement comprising a first part in form of a pin 8 which is connected to the rotor 6 and a second part in form of a stop member 9 which is connected to the shaft 7, the shaft 7 forming a rotating member. Accordingly, when the rotor 6 rotates, the shaft 7 rotates as well.

The shaft 7 comprises an outer thread forming a lead screw 10. The lead screw 10 is threadedly connected to a lead nut 11. When the shaft 7 rotates in one direction, the lead nut 11 is translated in one direction and when the shaft 7 rotates in the opposite direction the lead nut 11 is translated into the other direction.

The valve element 3 is connected to the lead nut 11, so that a movement of the lead nut 11 is directly transferred to the valve element 3.

However, a rotational movement between the rotor 6 and the shaft 7, i.e. the rotating member, is possible over a limited angle only.

To this end the stop member 9 comprises an elongated opening 12 in which the pin 8 arranged. It is not absolutely necessary that the opening 12 is thoroughgoing through the stop member 9. The opening 12 can be replaced by a groove or simply a recess which is open to the rotor 6 so that the pin 8 can be in engagement with this groove or recess.

However, to simplify the explanation, the embodiment is shown with an opening 12 which is kidney-shaped, i.e. extends in circumferential direction around the shaft 7.

Accordingly, a free rotation of the rotor 6 relative to the shaft 7 is possible as long as the pin 8 can move freely in the opening 12. This means, that the rotor 6 drives shaft 7 in opening direction only when the pin 8 contacts an end 13 of the opening 12.

The pin 8 is provided with an element 14, e.g. a ring. The element 14 can be an elastomeric element having a hardness of Shore A 90 or higher. The element 14 has a diameter which is larger than the diameter of pin 8. The element 14 can be of another plastic material as well.

Accordingly, the surface of the combination of pin 8 and elastomeric element 14 shows different characteristics in different axial sections. In the section of the elastomeric element 14 the surface is softer than in other regions of pin 8.

As can be seen in fig. 4, the stop member 9 forms a stop 15 which cooperates with the elastomeric element 14. Accordingly, the stop 15 is arranged in an axial position different from the axial position of the opening 12, wherein the axial position relates to the axis of the shaft 7. The elastomeric element 14 comes into contact with the stop 15 before the remaining part of the pin 8 comes in contact with the other end 16 of opening 12 in circumferential direction.

The stop 15 is provided in closing direction, i.e. the elastomeric member 14 contacts the stop member 9 and drags it into a rotational movement when the rotor 6 is rotated in the direction which is translated into a closing movement of the valve element 3. When the valve element 3 contacts the valve seat 2, the elastomeric element 4 which forms a first pairing of contact areas or contact surfaces, is rather soft, i.e. it has a small stiffness compared to a contact between the not covered area of the pin 8 and the end 13 of the bore 12 forming a second stop.

Accordingly, the second stop is formed by a pairing of hard surfaces and has consequently a larger stiffness than the first pairing.

This means that when the rotor is moved in a direction causing a movement of the valve element 3 away from the valve seat 2 that the hard area of the pin 8 hits a corresponding hard area of the stop member. However, before coming into contact with the end 13 of the opening 12 the pin 8 has been moved through the opening 12 and has accordingly a certain angular speed. This can be used to knock on the stop member 9 which in turn helps to release the valve element 3 from the valve seat 2.

The same effect is achieved when the motor 4 is in form of a stepper motor. When the stepper motor is no longer able to further rotate the rotor, it performs a kind of oscillational movement of the rotor in rotating direction. This causes a kind of "hammering". Such hammering in closing direction is dampened by the soft contact area pairing between the elastomeric element 14 and first stop 15 in the stop member 9. However, in the opposite direction, this hammering is directly transferred to the stop member 9 with the effect, that the valve member 3 is released from the valve seat 2.

As mentioned above, the elastomeric element 14 comes into contact with the first stop 15 before the pin 8 with the uncovered section comes in contact with the end 13 of the opening 12, i.e. with the second stop. It is of course possible to exchange the parts, i.e. to connect the stop member 9 to the rotor 6 and to connect the pin 8 to the shaft 7. It is also possible to rotate the lead nut 11 and to fix the lead screw 10. The principle remains the same.

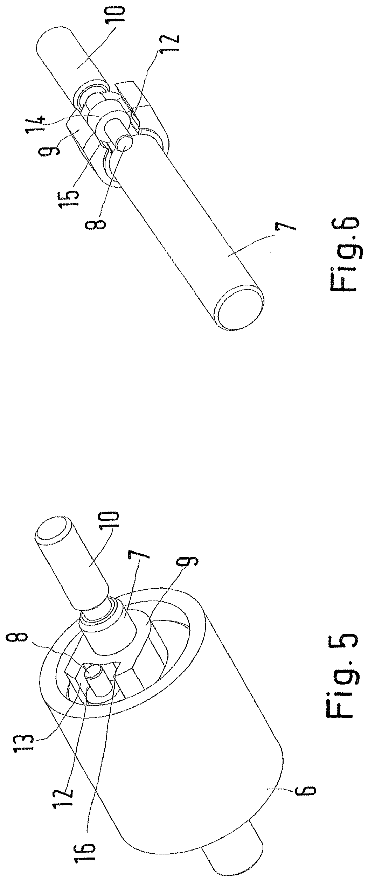

Fig. 5 and 6 show a slightly different embodiment of the valve shown in fig. 1 to 4. Fig. 5 and 6 show views similar to views of the first embodiment shown in fig. 3 and 4. Same elements are denoted with the same reference numerals.

The opening 12 is no longer kidney-shaped but in form of a groove running in a direction parallel to the axis of rotation of the rotor 6. Furthermore, the two stops 13, 15 are formed at the same axial position. They can, however, be formed at two different axial positions. In any case, both stops 13, 15 are contacted by the element 14, so that the pairing between the two contact surfaces at the two stops 13, 15 are the same.

## Claims

1. Valve (1), in particular expansion valve, comprising a valve seat (2), a valve element (3) movable relatively to the valve seat (2), and drive means driving the valve element (3), wherein the drive means comprise a rotary motor (4) having a rotor (6) and a transmission having a rotating member (7, 10) and a non-rotating member (11) and a threaded connection between the rotating member (7, 10) and the stationary member (11), **characterized in that** the rotor (6) and the rotating member (7) are rotatable relative to each other, wherein the transmission comprises a follower arrangement comprising a first part (8) connected to the rotor (6) and a second part (9) connected to the rotating member (7), wherein the first part (8) and the second part (9) are rotatable relative to each other over a limited angle.

2. Valve according to claim 1, **characterized in that** the limited angle is provided between a first stop (15) provided in closing direction of the rotating member (7) and a second stop (13) provided in opening direction of the rotating member (7), wherein the first stop (15) comprises a first pairing of contact areas and the second stop (13) comprises a second pairing of contact surfaces.

3. Valve according to claim 2, **characterized in that** the second pairing has a larger stiffness than the first pairing.

4. Valve according to claim 3, **characterized in that** the first pairing of contact surfaces is arranged in a first axial position and the second pairing of contact surfaces is arranged in second axial position.

5. Valve according to claim 2, **characterized in that** the first pairing and the second pairing have the same stiffness.

6. Valve according to any of claims 1 to 5, **characterized in that** one of the parts (8, 9) is in form of a pin (8) and the other of the parts comprises a stop member (9) having a recess (12) which has an extension in moving direction of the pin (8) which extension is larger than a corresponding extension of the pin (8).

7. Valve according to claim 6, **characterized in that** the recess (12) is in form of a curved groove or hole.

8. Valve according to claim 6 or 7, **characterized in that** the pin (8) is provided with an element (14) of different material, in particular a plastic element, over a part of its length.

9. Valve according to claim 8, **characterized in that** the elastomeric element (14) projects over the pin (8) in moving direction by a first distance and the stop member (9) comprises a stop offset to a border of the recess (12) in moving direction by a second distance, wherein the first distance is larger than the second distance.

10. Valve according to claim 8 or 9, **characterized in that** the elastomeric element (14) has a hardness of at least 90 Shore A.

11. Valve according to any of claims 6 to 10, **characterized in that** the motor (4) is a stepper motor and the recess (12) has an extension in moving direction of the pin which is less than or equal to two full steps of the motor (4).
